# FASCICULE DE BREVET EUROPEEN

(11) **EP 2 909 146 B1**
(45) Date de publication et mention de la délivrance du brevet: **07.08.2024**
(21) Numéro de dépôt: 13776840.4
(22) Date de dépôt: 12.09.2013
(51) Int. Cl.: C01G 33/00, H01M 4/485, H01M 10/052, B82Y 30/00

(54) **PROCEDE DE PREPARATION D'UN OXYDE MIXTE DE TITANE ET DE NIOBIUM PAR TRAITEMENT SOLVOTHERMAL; ELECTRODE ET ACCUMULATEUR AU LITHIUM COMPRENANT LEDIT OXYDE MIXTE**
VERFAHREN ZUR HERSTELLUNG EINES TITAN- UND NIOBMISCHOXIDS DURCH WÄRMELÖSUNGSBEHANDLUNG SOWIE ELEKTRODE UND LITHIUMBATTERIE MIT DIESEM MISCHOXID
METHOD FOR PREPARING A TITANIUM AND NIOBIUM MIXED OXIDE BY SOLVOTHERMAL TREATMENT; ELECTRODE AND LITHIUM ACCUMULATOR COMPRISING SAID MIXED OXIDE

(30) Priorité: 17.10.2012 FR 1259881
(43) Date de publication de la demande: 26.08.2015
(73) Titulaire: Commissariat à l'Énergie Atomique et aux Énergies Alternatives, 75015 Paris (FR)
(72) Inventeur: BUANNIC, Lucienne, F-38360 Sassenage (FR); COLIN, Jean-François, F-38240 Meylan (FR); DANIEL, Lise, F-38160 Saint Marcellin (FR)
(74) Mandataire: Cabinet Laurent & Charras
(86) Numéro de dépôt international: PCT/FR2013/052099
(87) Numéro de publication internationale: WO 2014/060662

(56) Documents cités:
- EP-A1- 2 327 663
- WO-A2-2012/016185
- JP-A- 2010 287 496

## Description

### DOMAINE DE L'INVENTION

L'invention concerne un procédé de préparation d'un oxyde mixte de lithium et de niobium. Elle concerne également une électrode à base de cet oxyde mixte ainsi qu'un accumulateur au lithium comportant ladite électrode.

Le domaine d'utilisation de l'invention se rapporte particulièrement au stockage de l'énergie électrique, que ce soit notamment pour des appareils électroniques portables, pour les automobiles hybrides ou tout électrique, mais encore pour le stockage de l'énergie issue de cellules photovoltaïques.

### ETAT ANTERIEUR DE LA TECHNIQUE

La capacité de stockage de l'énergie électrique par les accumulateurs, qu'ils soient de type nickel-cadmium (Ni-Cd) et nickel-hydrure métallique (Ni-MH) ou lithium, permet d'assurer une autonomie énergétique conséquente pour l'utilisateur d'équipements électroniques.

L'optimisation de ces accumulateurs passe notamment par l'amélioration de leur densité d'énergie, en d'autres termes de la capacité à stocker de l'énergie par unité de volume et de masse. A cet égard, les accumulateurs au lithium sont de plus en plus utilisés, notamment dans le domaine des équipements portables, étant donné que leurs densités d'énergie massique et volumique sont généralement nettement supérieures à celles des accumulateurs Ni-Cd et Ni-MH.

Par exemple, des accumulateurs Li-ion présentant une densité d'énergie de l'ordre de 200 Wh/kg ont été développés. A titre de comparaison, les accumulateurs Ni-Cd et Ni-MH n'excèdent pas 50 et 100 Wh/kg respectivement.

L'optimisation de ces accumulateurs a également entrainé le développement et l'utilisation de nouveaux matériaux d'électrodes.

Dans le cas du matériau actif d'une électrode positive d'un accumulateur au lithium du commerce, il peut s'agir d'un composé lamellaire tel que LiCoO₂, LiNiO₂ et les composés mixtes Li(Ni, Co, Mn, Al)O₂ ou un composé de structure spinelle de composition proche de LiMn₂O₄.

En revanche, le matériau actif de l'électrode négative est généralement du carbone (graphite, coke...), le spinelle Li₄Ti₅O₁₂, ou un métal formant un alliage avec le lithium (Sn, Si, ...). Les capacités spécifiques théoriques et pratiques des composés d'électrode négative graphite et oxyde de titane sont respectivement d'environ 370 mAh/g et 170 mAh/g.

Bien qu'il présente une capacité inférieure à celle du graphite, le composé Li₄Ti₅O₁₂ présente certains avantages, notamment eu égard (i) à son potentiel de travail élevé, environ 1.6V, qui le rend très sécuritaire, et (ii) à une très bonne cyclabilité à haut régime.

D'autres matériaux ont été développés, notamment des oxydes de niobium et des oxydes mixtes de titane et de niobium. Le niobium présente en effet un potentiel de travail proche de celui du titane. Il permet en outre d'échanger 2 électrons par métal (Nb⁵⁺ + 2 e⁻ ↔ Nb³⁺).

Parmi les oxydes mixtes de titane et de niobium, on peut notamment citer les oxydes lamellaires de types ATiNbO₅ (A = H, Li) mais également le Ti₂Nb₂O₉, le TiNb₂O₇ et le Ti₂Nb₁₀O₂₉. Certains de ces composés présentent des capacités de l'ordre de 250mAh/g. Toutefois, certains de ces oxydes peuvent présenter l'inconvénient de ne pas fournir la réversibilité nécessaire aux échanges inhérents aux accumulateurs au lithium.

En outre, la capacité de certains de ces oxydes mixtes diminue drastiquement à régime élevé. Un dopage au niobium et un revêtement (« *coating* ») avec du carbone peuvent atténuer, voire annuler cette perte de capacité. Néanmoins, ces techniques requièrent des conditions expérimentales particulières difficilement envisageables à l'échelle industrielle (mise sous vide, atmosphère inerte).

Pour pallier ces inconvénients, la synthèse de TiNb₂O₇ par voie sol-gel a été développée. Or cette méthode implique au préalable l'utilisation d'acide fluorohydrique. En outre, bien que les performances à bas régime du composé TiNb₂O₇ atteignent 280 mAh/g, les capacités diminuent lors de son utilisation à haut régime.

D'autres synthèses ont été développées, notamment celle de Ti_{0.9}Nb_{2.1}O₇ par voie solide. Ce matériau, lorsqu'il est enrobé de carbone, présente une capacité de 190mAh/g à 9C, soit 67% de la capacité à bas régime. Néanmoins, cette synthèse nécessite également des conditions expérimentales contraignantes (atmosphère sous vide et inerte) pour les étapes de dopage au niobium et de coating.

Le document JP2010-287496 décrit un tel procédé de préparation d'un oxyde mixte de titane et de niobium par voie solide.

Le document WO2012016185 décrit un procédé de synthèse d'un oxyde mixte de titane et de niobium mettant en oeuvre une étape de formation d'un gel.

Le document EP 2327663 décrit une méthode de préparation d'une poudre d'oxyde mixte de titane et de niobium.

Le Demandeur a développé une voie de synthèse d'oxydes mixtes de titane et de niobium, ne nécessitant pas de conditions expérimentales telles que la mise sous vide ou une atmosphère inerte.

L'invention permet ainsi de préparer rapidement un matériau d'oxyde mixte de titane et de niobium présentant une tenue à haut régime améliorée par rapport aux oxydes de l'art antérieur.

### EXPOSE DE L'INVENTION

Le Demandeur a mis au point un procédé permettant de préparer un oxyde mixte de titane et de niobium, tout en nécessitant peu d'énergie par rapport aux procédés de l'art antérieur. En outre, ce procédé permet d'optimiser les propriétés de l'oxyde mixte ainsi obtenu, mais aussi la performance électrochimique des accumulateurs contenant ledit oxyde mixte.

Ce procédé comprend notamment une synthèse solvothermale mettant en oeuvre des précurseurs à base de titane et de niobium. Ce traitement solvothermal permet de conserver une température de calcination basse favorisant la conductivité ionique. Le procédé de l'invention ne requiert aucune atmosphère particulière.

Plus précisément, la présente invention concerne un procédé de préparation d'un oxyde mixte de titane et de niobium comprenant les étapes suivantes :
- préparation d'un oxyde mixte de titane et de niobium sous forme amorphe par traitement solvothermal d'au moins un précurseur de titane et d'au moins un précurseur de niobium ;
- broyage mécanique de l'oxyde mixte de titane et de niobium obtenu à l'issue du traitement solvothermal ;
- calcination de l'oxyde mixte obtenu après broyage mécanique.

L'oxyde mixte de titane et de niobium ainsi obtenu correspond préférentiellement à la formule TiₓNb_{2y}O_{(2x+5y)} (ou x TiO₂ + y Nb₂O₅), x étant compris entre 1 et 2 et y étant compris entre 1 et 12, x et y n'étant pas nécessairement des nombres entiers, même si de préférence, ils sont entiers.

### Traitement solvothermal :

Généralement, le traitement solvothermal comprend les étapes suivantes :
- mettre en solution les précurseurs de titane et de niobium ;
- précipiter les précurseurs ;
- traiter thermiquement et sous pression les précurseurs précipités ainsi obtenus.

La mise en solution des précurseurs est avantageusement réalisée dans un alcool, comme de l'éthanol. Alternativement, d'autres alcools peuvent être utilisés comme l'isopropanol, le butanol, voire des glycols.

Les précurseurs sont avantageusement solubilisés dans la même solution, afin de former un mélange homogène.

La précipitation du mélange ainsi obtenu peut notamment être réalisée par ajustement du pH, avantageusement à environ 10. Cette étape peut être avantageusement mise en oeuvre par addition d'ammoniaque.

La précipitation du mélange de précurseurs peut donner une pâte.

De manière générale, le traitement solvothermal auquel est soumis le mélange de précurseurs précipités peut être réalisé à une température comprise entre 200 et 250°C, avantageusement de l'ordre de 220°C.

L'augmentation de la température peut correspondre à un gradient compris entre 1 et 5°C/min, avantageusement 2 °C/min.

D'autre part, la rampe de refroidissement peut avantageusement être comprise entre 1 et 10 °C/min, avantageusement 5 °C/min.

La durée de ce traitement solvothermal peut être comprise entre 2 et 10 heures, avantageusement de l'ordre de 5 heures. De manière générale, la durée de traitement ne comprend pas le temps nécessaire pour chauffer et pour refroidir le mélange.

Toutefois, les conditions peuvent dépendre de la quantité de matériau à traiter.

Selon un mode de réalisation préféré, le traitement solvothermal est mis en oeuvre dans une bombe hydrothermale (réacteur, autoclave) afin de procéder à un traitement thermique sous pression. Le volume « mort » dans le containeur (en général en polytétrafluoroethylène (Téflon^{®})) peut avantageusement représenter les deux tiers du volume total.

### Lavage :

Le procédé - objet de l'invention peut également comprendre au moins une étape de lavage avant l'étape de calcination.

Une fois le traitement solvothermal terminé, le mélange résultant (oxyde mixte sous forme amorphe) se présentant avantageusement sous la forme d'une pâte, peut être éventuellement lavé afin de séparer l'oxyde mixte des sous-produits non-désirés.

Cette étape de lavage est préférentiellement effectuée à l'eau distillée. Le lavage peut être réalisé par des étapes successives de centrifugation jusqu'à ce que le pH de la solution surnageante soit compris entre 6 et 7. Ce lavage permet notamment d'éliminer les sulfates, chlorures et hydroxydes résiduels éventuellement présents.

A l'issue du lavage, le mélange est séché, avantageusement à l'air, notamment dans une étuve, dont la température est avantageusement d'au moins 60°C, et inférieure à 150°C.

### Broyage :

Le procédé objet de l'invention comprend une étape de broyage mécanique de l'oxyde mixte amorphe obtenu par traitement solvothermal des précurseurs de titane et de niobium.

Le broyage est avantageusement effectué après l'éventuel lavage. Toutefois, le broyage est réalisé préalablement à l'étape de calcination.

Le broyage est généralement réalisé dans un broyeur à une vitesse comprise entre 300 et 500 tours par minute, avantageusement de l'ordre de 500 tours par minute.

Le broyeur utilisé peut être, par exemple, un broyeur centrifuge à bille de type Retsch S 100.

La durée de l'étape de broyage est avantageusement comprise entre 15 et 120 minutes, plus avantageusement encore de l'ordre de 30 minutes.

Le broyage permet notamment d'homogénéiser la taille des particules avant l'étape de calcination.

En outre, sans émettre une quelconque théorie, le Demandeur a observé que l'étape de broyage avant calcination permet d'assurer une bonne stabilité électrochimique de l'oxyde mixte de titane et de niobium, en cyclage de l'oxyde mixte par rapport à un oxyde synthétisé par une voie solvothermale sans broyage intermédiaire.

### Calcination :

La calcination de l'oxyde mixte de titane et de niobium amorphe est avantageusement réalisée à une température comprise entre 700 et 1200°C, et préférentiellement entre 700 et 1000°C.

La durée de cette étape est avantageusement comprise entre 30 mn et 2 heures, plus avantageusement de l'ordre d'une heure.

En outre, la vitesse de chauffe peut être comprise entre 1 et 5 °C/min, avantageusement de l'ordre de 3°C/min.

La vitesse de refroidissement peut être comprise entre 5 et 20 °C/min, avantageusement de l'ordre de 10°C/min.

Cette étape favorise la cristallisation de la structure de l'oxyde mixte de titane et de niobium. Elle peut être réalisée sous air, tout comme l'ensemble des étapes du procédé objet de l'invention.

Il est à noter que la température optimale de calcination des composés dépend de la stoechiométrie de l'oxyde mixte à synthétiser. Elle ne peut être généralisée.

### Précurseurs :

Le précurseur de titane peut être avantageusement choisi dans le groupe comprenant l'oxysulfate de titane (TiOSO₄); l'isopropoxyde de titane (Ti(OCH(CH₃)₂)₄); le chlorure de titane (TiCl₄) ; et le butoxyde de titane (Ti(OC₄H₉)₄).

Pour le niobium, il s'agit avantageusement d'un composé de niobium V, et notamment du chlorure de niobium (NbCl₅) ou l'éthoxyde de niobium, Nb(OC₂H₅)₅.

### Oxyde mixte - utilisation :

La présente invention concerne également l'oxyde mixte de titane et de niobium cristallisé obtenu selon le procédé décrit ci-avant. Il peut notamment s'agir d'un oxyde mixte de formule TiₓNb_{2y}O_{(2x+5y)} (ou x TiO₂ + y Nb₂O₅), x étant compris entre 1 et 2 et y étant compris entre 1 et 12, x et y n'étant pas nécessairement des nombres entiers, même si de préférence, ils sont entiers.

Selon un mode de réalisation particulier, l'oxyde mixte est le TiNb₂O₇, x = 1 et y = 1.

Selon un autre mode de réalisation particulier, l'oxyde mixte est le Ti₂Nb₁₀O₂₉, x = 2 et y = 5.

Le procédé de l'invention permet d'augmenter la surface spécifique de l'oxyde mixte par rapport aux procédés de l'art antérieur. Cela peut ainsi engendrer une modification de la capacité spécifique du matériau.

Ainsi, la surface spécifique de l'oxyde mixte de la présente invention est avantageusement comprise entre 1 m²/g et 50 m²/g, plus avantageusement encore entre 5 et 45 m²/g.

Il peut se présenter sous la forme de particules, dont la taille est avantageusement inférieure à un micromètre. Néanmoins, ces particules peuvent former des agrégats d'une dizaine de micromètres.

En particulier, le broyage avant calcination permet de faire apparaître une granulométrie particulière de l'oxyde mixte de l'invention, avec une double population : d'une part une première population constituée de particules dites primaires de diamètre moyen compris entre 0,2 et 1 micromètre, centré sur 0,4 micromètre et d'autre part, d'une seconde population constituée des agrégats de particules primaires, lesdits agrégats ayant un diamètre moyen compris entre 4 et 14 micromètres, centré sur 10 micromètres.

Au contraire, sans étape de broyage, on constate que la granulométrie est disperse.

Cet oxyde mixte peut être utilisé dans la fabrication d'électrodes, notamment les électrodes destinées aux accumulateurs lithium.

Eu égards à ses propriétés, et en comparaison avec les composés de l'art antérieur, l'oxyde mixte de titane et niobium de l'invention peut être utilisé dans des applications requérant plus d'énergie.

Par exemple, les composés TiNb₂O₇ et Ti₂Nb₁₀O₂₉ présentent des capacités théoriques de 388 mAh/g et 396 mAh/g respectivement alors que le composé Li₄Ti₅O₁₂ couramment utilisé dans les accumulateurs lithium de l'art antérieur présente une capacité théorique de 175 mAh/g.

En outre, le potentiel de travail des composés TiNb₂O₇ et Ti₂Nb₁₀O₂₉ est proche de celui de Li₄Ti₅O₁₂, ce qui leur permet de conserver les avantages sécuritaires de ce dernier.

### Electrode - Accumulateur lithium :

Font également partie de l'invention, une électrode comprenant l'oxyde mixte de titane et de niobium de l'invention, et l'accumulateur au lithium contenant au moins une électrode de ce genre.

L'oxyde mixte de titane et de niobium de l'invention peut ainsi être utilisé dans ce type de structure en tant que matériau d'insertion des ions Li⁺.

Par accumulateur lithium, on entend notamment :
- un accumulateur au lithium métal comprenant une électrode négative dont le matériau actif est le lithium métallique, et une électrode positive contenant un matériau d'insertion ; ou
- un accumulateur Li-ion dans lequel le lithium reste à l'état d'ions Li⁺. De manière générale, les électrodes positive et négative de ce type d'accumulateur contiennent chacune un matériau d'insertion.

Généralement, un accumulateur au lithium comprend au moins une électrode positive et au moins une électrode négative. Les électrodes de signes opposés sont séparées par un séparateur d'électrodes qui est imbibé d'électrolyte (conducteur ionique).

Les électrodes dont le matériau actif n'est pas le lithium métallique, peuvent être préparées selon les techniques de l'art antérieur faisant partie des connaissances générales de l'homme du métier, et notamment à partir d'une encre comprenant au moins un matériau actif d'électrode, et éventuellement un conducteur électronique, et un liant.

Les électrodes peuvent ainsi être déposées sur des feuilles métalliques (aluminium par exemple) servant de collecteurs de courant.

Le liant permet d'apporter une bonne conduction ionique et une tenue mécanique satisfaisante. Il peut être notamment au moins un composé choisi dans le groupe comprenant les polyéthers ; les polyesters ; la carboxyméthylcellulose ; les polymères à base d'au moins un monomère, tel que le méthacrylate de méthyle, l'acrylonitrile, ou le fluorure de vinylidène.

Le conducteur électronique permet de faciliter le transfert du courant depuis l'électrode jusqu'au collecteur de courant. Il peut s'agir de carbone de taille nanométrique tel que le Super P^{®} ou le VGCF (de l'anglais « Vapor grown carbon fiber » c'est-à-dire des fibres de carbone déposées en phase vapeur) par exemple.

Comme déjà dit, l'accumulateur au lithium comprend un séparateur d'électrodes imbibé d'électrolyte (conducteur ionique). L'électrolyte est conducteur d'ions Li⁺, il permet aux cations Li⁺ de migrer d'une électrode à l'autre. Il contient avantageusement un sel dont le cation est au moins en partie du lithium et un solvant polaire aprotique. Il peut, par exemple, être constitué d'un sel de lithium comportant des cations Li⁺ tel que LiClO₄, LiAsF₆, LiPF₆, LiBF₄, LiRFSO₃, LiCH₃SO₃, LiN(RFSO₂)₂, LiC(RFSO₂)₃, LiTFSI (lithium trifluoromethane sulphonylimide), LiBOB (bis(oxalato)borate), LiBETI (lithium bis (perfluoroethylsulfonyl)imide).

Dans ces formules, le groupement RF est avantageusement un atome de fluor ou un groupement perfluoroalkyle pouvant comporter entre un et huit atomes de carbone.

Le sel de lithium est de préférence dissous dans un solvant polaire aprotique (par exemple le carbonate d'éthylène, le carbonate de propylène, le carbonate de diméthyle, le carbonate de diéthyle, ou le carbonate d'éthylméthyle...) et supporté par le séparateur disposé entre deux électrodes de signes opposés de l'accumulateur lithium.

L'électrolyte peut également être à base d'un polymère. Dans ce cas, le sel de lithium n'est pas dissous dans un solvant organique, mais dans un composite polymère solide tel que notamment le POE (polyoxyde d'éthylène), le PAN (polyacrylonitrile), le PMMA (polyméthacrylate de méthyle), le PVdF (polyfluorure de vinylidène) ou l'un de leurs dérivés.

Comme déjà indiqué, l'accumulateur au lithium de l'invention peut être un accumulateur au lithium métal ou un accumulateur Li-ion.

Selon un mode de réalisation particulier, il s'agit d'un accumulateur Li-ion dont le matériau actif de l'électrode négative est l'oxyde mixte de titane et de niobium décrit ci-avant. L'électrode négative peut être constituée majoritairement de l'oxyde mixte de titane niobium.

Dans ce cas, l'électrode positive peut être constituée par tout type de matériau connu pouvant être une source de lithium pour l'électrode négative. Ce matériau d'électrode peut ainsi fournir initialement les ions Li⁺, et les réinsérer par la suite. Par exemple, l'électrode positive peut être constituée de matériau lamellaire de type Li₁₊ᵥNiₓMn_{y}Co_{z}O₂ avec x+ y + z + v = 1 ; de matériau de type spinelle LiNiᵤMn₂₋ᵤO₄ avec 0 < u < 1 ; ou encore d'un matériau de type phosphate LiMPO₄ avec M = Fe, Mn, Co, Ni.

Ainsi, dans un accumulateur Li-ion, le lithium ne se trouve jamais sous forme métallique mais sous forme de cations Li⁺ qui font des allers et retours entre les deux matériaux d'insertion du lithium des électrodes négative et positive, à chaque charge et décharge de l'accumulateur.

Dans le cas d'un accumulateur au lithium métallique, l'électrode négative est en lithium métallique alors que le matériau actif de l'électrode positive peut comprendre l'oxyde métallique de titane et de niobium de l'invention.

L'invention et les avantages qui en découlent ressortiront mieux des figures et exemples suivants donnés afin d'illustrer l'invention et non de manière limitative.

### DESCRIPTION DES FIGURES

La figure 1a représente une photographie obtenue par microscopie électronique par balayage du matériau TiNb₂O₇ (calcination à 750°C).
La figure 1b représente une photographie obtenue par microscopie électronique par balayage du matériau TiNb₂O₇ obtenu selon le procédé de l'invention (broyage mécanique et calcination à 750°C).
La figure 1c représente le graphe correspondant au pourcentage volumique en fonction du diamètre des particules du matériau TiNb₂O₇ (avec ou sans broyage mécanique ; calcination à 750°C).
La figure 2a représente une photographie obtenue par microscopie électronique par balayage de Ti₂Nb₁₀O₂₉ obtenu selon le procédé de l'invention (calcination à 950°C).
La figure 2b représente une photographie obtenue par microscopie électronique par balayage de Ti₂Nb₁₀O₂₉ obtenu selon le procédé de l'invention (broyage mécanique et calcination à 950°C).
La figure 3a représente un graphe correspondant à la capacité spécifique à C/10 d'un matériau de TiNb₂O₇ obtenu selon le procédé de l'invention (calcination à 750°C), en fonction du voltage.
La figure 3b représente un graphe correspondant à la capacité spécifique à C/10 d'un matériau de Ti₂Nb₁₀O₂₉ obtenu selon le procédé de l'invention (calcination à 950°C), en fonction du voltage.
La figure 4a illustre un graphe correspondant à l'évolution de la capacité spécifique en fonction du nombre de cycles à régime variable (C/10, C et 10C) entre 3,0 et 1,0 V pour le matériau TiNb₂O₇ obtenu selon le procédé de l'invention (calcination à 750°C) avec ou sans broyage.
La figure 4b illustre un graphe correspondant à l'évolution de la capacité spécifique en fonction du nombre de cycles à régime variable (C/10, C et 10C) entre 3,0 et 1,0 V pour le matériau Ti₂Nb₁₀O₂₉ obtenu selon le procédé de l'invention (calcination à 950°C) avec ou sans broyage.
La figure 5a illustre un graphe correspondant à l'évolution de la capacité spécifique en fonction du nombre de cycles à régime variable (C/10, C et 10C) entre 3,0 et 1,0 V pour le matériau TiNb₂O₇ obtenu selon le procédé de l'invention (avec ou sans broyage, calcination à 950°C).
La figure 5b illustre un graphe correspondant à l'évolution de la capacité spécifique en fonction du nombre de cycles à régime variable (C/10, C et 10C) entre 3,0 et 1,0 V pour le matériau Ti₂Nb₁₀O₂₉ obtenu selon le procédé de l'invention (avec ou sans broyage, calcination à 750°C).
La figure 6a représente une photographie obtenue par microscopie électronique par balayage d'un matériau TiNb₂O₇ obtenu par voie solide selon l'art antérieur.
La figure 6b représente une photographie obtenue par microscopie électronique par balayage d'un matériau Ti₂Nb₁₀O₂₉ obtenu par voie solide selon l'art antérieur.

### EXEMPLES DE REALISATION DE L'INVENTION

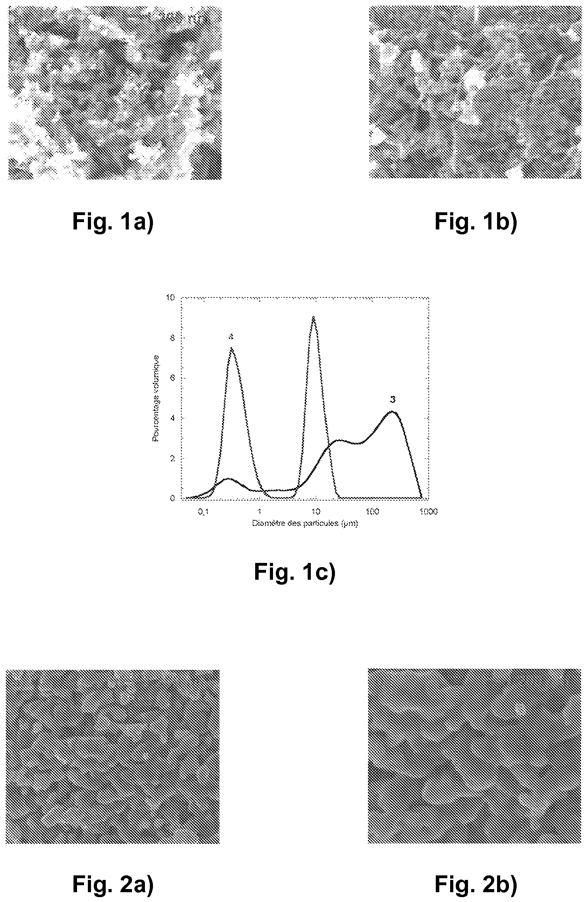

### Exemple 1 : Synthèse de TiNb₂O₇ selon le procédé de l'invention (figures 1a et 1b)

Du NbCl₅ (3,13 g) est dissous dans 10 mL d'éthanol anhydre sous atmosphère d'argon et sous agitation magnétique. La solution est transférée sous air.

De l'oxysulfate de titane (TiOSO₄) (6,17 g) à 15 % en masse dans l'acide sulfurique sont ajoutés à cette solution.

Ensuite, 10 mL d'éthanol sont rajoutés afin de dissoudre les précurseurs, le tout sous agitation magnétique.

Le pH de la solution est ajusté à 10 par lente addition d'ammoniaque à 28 % en masse dans l'eau.

La pâte ainsi obtenue est transférée dans un conteneur en téflon^{®} de 90 mL de contenance, placé dans l'autoclave correspondante qui est ensuite chauffée à 220°C pendant 5 heures avec une rampe de chauffe et de refroidissement de 2 et 5 °C/min respectivement.

La pâte est ensuite lavée à l'eau distillée par centrifugation jusqu'à obtention d'un pH entre 6 et 7.

Le composé est séché à 60°C pendant 12 heures puis broyé mécaniquement pendant 30 min à 500 rpm dans de l'hexane.

Après évaporation du solvant, la poudre est calcinée à 750°C pendant 1 heure avec une température de chauffe/refroidissement de 3 °C/min afin de cristalliser TiNb₂O₇.

La surface spécifique du matériau après traitement thermal, broyage et calcination ainsi que l'allure du matériau sont présentés dans le tableau 1 et la figure 1 (échantillons 2, 4, 6).

Ce matériau est comparé au même matériau n'ayant pas subi de traitement de broyage (échantillons 1, 3, 5).

### Exemple 2: Synthèse de Ti₂Nb₁₀O₂₉ selon le procédé de l'invention (figures 2a et 2b)

Du NbCl₅ (3,63 g) est dissous dans 10 mL d'éthanol anhydre sous atmosphère d'argon et sous agitation magnétique.

La solution est transférée sous air.

2,865 g d'oxysulfate de titane (TiOSO₄) à 15 % en masse dans l'acide sulfurique est ajouté à cette solution.

Ensuite, 10 mL d'éthanol sont ajoutés afin de dissoudre les précurseurs, le tout sous agitation magnétique.

Le pH de la solution est ajusté à 10 par lente addition d'ammoniaque à 28 % en masse dans l'eau.

La pâte est transférée dans un conteneur en téflon de 90 mL de contenance placé dans l'autoclave correspondante qui est ensuite chauffée à 220°c pendant 5 heures avec une rampe de chauffe et de refroidissement de 2 et 5 °C/min respectivement.

La pâte est alors lavée à l'eau distillée par centrifugation jusqu'à obtention d'un pH entre 6 et 7.

Le composé est séché à 60°C pendant 12 heures puis broyé mécaniquement pendant 30 min à 500 rpm dans de l'hexane.

Après évaporation du solvant, la poudre est calcinée à 950°C pendant 1 heure avec une température de chauffe/refroidissement de 3 °C/min afin de cristalliser Ti₂Nb₁₀O₂₉.

La surface spécifique du matériau après traitement thermal, broyage et calcination ainsi que l'allure du matériau sont présentés dans le tableau 2 et la figure 2 (échantillons 8, 10, 12).

Ce matériau est comparé au même matériau n'ayant pas subi de traitement de broyage (échantillons 7, 9, 11).

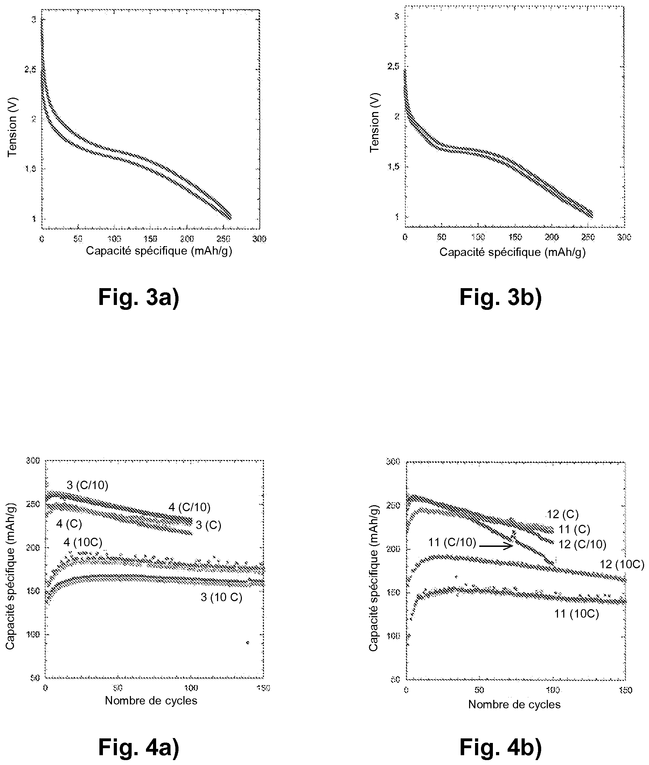

### Exemple 3: Accumulateur au lithium métallique comprenant les matériaux des exemples 1 et 2 (figures 3 à 5)

Un accumulateur au lithium métallique de format « pile bouton » est préparé par assemblage des éléments suivants :
- une électrode négative de lithium (16 mm de diamètre, 130 micromètres d'épaisseur) déposé sur un disque de nickel servant de collecteur de courant ;
- une électrode positive constituée d'un disque de 14 mm de diamètre prélevée sur un film composite de 25 micromètres d'épaisseur comprenant les matériaux de l'invention préparés selon les exemples 1 et 2 (80 % en masse), du carbone Super P (10 % en masse) en tant que conducteur électronique, et du fluorure de polyvinylidène (10 % en masse) en guise de liant, le tout étant déposé sur un collecteur de courant en aluminium (feuille de 20 micromètres d'épaisseur) ;
- un séparateur imbibé d'un électrolyte liquide à base du sel LiPF₆ (1 mol/L) en solution dans un mélange de carbonate d'éthyle, carbonate de propylène et carbonate de diméthyle.

Les performances électrochimiques des accumulateurs ainsi préparés avec les matériaux décrits dans les exemples 1 et 2 sont illustrées par les figures 3 à 5.

Elles sont également comparées à celles d'accumulateurs préparés avec les matériaux des exemples 1 et 2 n'ayant pas été calcinés.

**Tableau 1 : Effet des différentes étapes de synthèse sur la surface spécifique de l'oxyde mixte TiNb₂O₇ de l'exemple 1.**

| Echantillon | 1 | 2 | 3 (fig. 1c fig. 4a) | 4 (fig. 1c fig. 4a) | 5 (fig. 5a) | 6 (fig. 5a) |
|---|---|---|---|---|---|---|
| Traitement solvothermal | Oui | Oui | Oui | Oui | Oui | Oui |
| Broyage mécanique | Non | Oui | Non | Oui | Non | Oui |
| Calcination (°C) | Non | Non | 750 | 750 | 950 | 950 |
| Surface spécifique (m²/g) | 238 | 170 | 44 | 31 | 11 | 9 |

**Tableau 2 : Effet des différentes étapes de synthèse sur la surface spécifique de l'oxyde mixte Ti₂Nb₁₀O₂₉ de l'exemple 2.**

| Echantillon | 7 | 8 | 9 (fig. 5b) | 10 (fig. 5b) | 11 (fig. 4b) | 12 (fig. 4b) |
|---|---|---|---|---|---|---|
| Traitement solvothermal | Oui | Oui | Oui | Oui | Oui | Oui |
| Broyage mécanique | Non | Oui | Non | Oui | Non | Oui |
| Calcination (°C) | Non | Non | 750 | 750 | 950 | 950 |
| Surface spécifique (m²/g) | 183 | 131 | 18 | 14 | 6.3 | 4.9 |

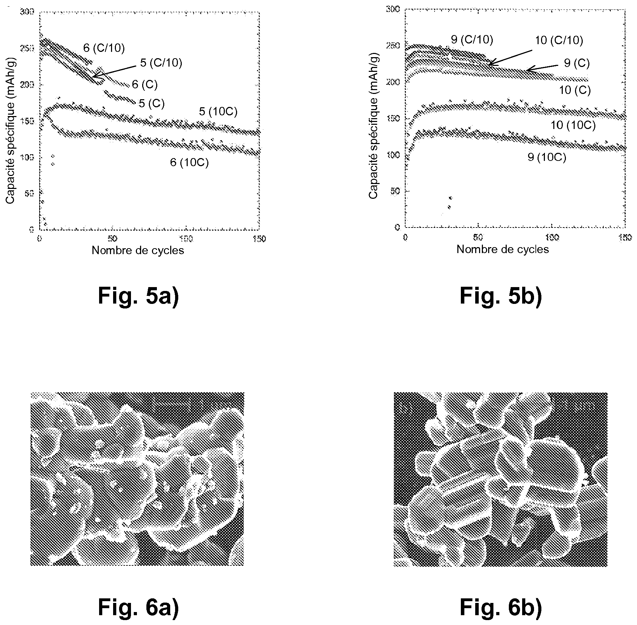

### Contre exemples CE1 et CE2 (figure 6)

Les oxydes TiNb₂O₇ (CE1) et Ti₂Nb₁₀O₂₉ (CE2) ont été préparés par voie solide selon l'art antérieur par broyage mécanique des oxydes respectifs de titane et niobium, puis calcination à 1150°C pendant 24 heures.

Les valeurs de la surface spécifique de chacun de ces matériaux sont regroupées dans le tableau 3.

**Tableau 3 : Surface spécifique des composés TiNb₂O₇ et Ti₂Nb₁₀O₂₉ de l'art antérieur.**

| Echantillon | CE1 (TiNb₂O₇) (fig. 6a) | CE2 (Ti₂Nb₁₀O₂₉) (fig. 6b) |
|---|---|---|
| Calcination (°C) | 1150 | 1150 |
| Surface spécifique (m²/g) | 0.49 | 0.98 |

## Revendications

1. Procédé de préparation d'un oxyde mixte de titane et de niobium comprenant les étapes suivantes :
- préparation d'un oxyde mixte de titane et de niobium sous forme amorphe par traitement solvothermal d'au moins un précurseur de titane et d'au moins un précurseur de niobium ;
- broyage mécanique de l'oxyde mixte de titane et de niobium obtenu à l'issue du traitement solvothermal ;
- calcination de l'oxyde mixte obtenu après broyage.

2. Procédé de préparation d'un oxyde mixte de titane et de niobium selon la revendication 1, ***caractérisé* en ce que** le traitement solvothermal des précurseurs de titane et de niobium est réalisé à une température comprise entre 200 et 250°C.

3. Procédé de préparation d'un oxyde mixte de titane et de niobium selon la revendication 1 ou 2, ***caractérisé* en ce que** l'oxyde mixte sous forme amorphe est lavé préalablement à l'étape de calcination.

4. Procédé de préparation d'un oxyde mixte de titane et de niobium selon l'une des revendications 1 à 3, ***caractérisé* en ce que** l'étape de calcination est réalisée à une température comprise entre 700 et 1200°C.

5. Procédé de préparation d'un oxyde mixte de titane et de niobium selon l'une des revendications 1 à 4, ***caractérisé* en ce que** le précurseur de titane est choisi dans le groupe comprenant l'oxysulfate de titane (TiOSO₄) ; l'isopropoxyde de titane (Ti(OCH(CH₃)₂)₄) ; le chlorure de titane (TiCl₄) ; le butoxyde de titane (Ti(OC₄H₉)₄).

6. Procédé de préparation d'un oxyde mixte de titane et de niobium selon l'une des revendications 1 à 5, ***caractérisé* en ce que** le précurseur de niobium est choisi dans le groupe comprenant le chlorure de niobium (NbCl₅) ; l'éthoxyde de niobium, Nb(OC₂H₅)₅.

7. Oxyde mixte de titane et de niobium obtenu selon le procédé objet de l'une des revendications 1 à 6, ***caractérisé* en ce qu'**il présente une surface spécifique comprise entre 5 m²/g et 45 m²/g.

8. Oxyde mixte de titane et de niobium selon la revendication 7, ***caractérisé* en ce qu'**il est de formule TiₓNb_{2y}O_{(2x+5y)}, x étant compris entre 1 et 2 et y étant compris entre 1 et 12.

9. Electrode dont le matériau actif comprend au moins un oxyde mixte de titane et de niobium selon la revendication 7.

10. Electrode négative dont le matériau actif comprend au moins un oxyde mixte de titane et de niobium selon la revendication 7.

11. Accumulateur au lithium contenant au moins une électrode dont le matériau actif comprend au moins un oxyde mixte de titane et de niobium selon la revendication 7.

## Patentansprüche

1. Verfahren zur Herstellung eines Mischoxids aus Titan und Niob, das folgende Schritte umfasst:
- Herstellung eines Mischoxids aus Titan und Niob in amorpher Form durch solvothermische Behandlung von mindestens einem Titanvorläufer und mindestens einem Niobvorläufer;
- Mechanische Zerkleinerung des nach der solvothermischen Behandlung erhaltenen Mischoxids aus Titan und Niob;
- Kalzination des gemahlenen Mischoxids.

2. Verfahren zur Herstellung eines Titan-Niob-Mischoxids nach Anspruch 1, ***dadurch gekennzeichnet,* dass** die solvothermale Behandlung der Titan- und Niobvorläufer bei einer Temperatur zwischen 200 und 250°C durchgeführt wird.

3. Verfahren zur Herstellung eines Mischoxids von Titan und Niob nach Anspruch 1 oder 2, ***dadurch gekennzeichnet,* dass** das Mischoxid in amorpher Form vor dem Kalzinierungsschritt gewaschen wird.

4. Verfahren zur Herstellung eines Titan-Niob-Mischoxids nach einem der Ansprüche 1 bis 3, ***dadurch gekennzeichnet,* dass** der Kalzinierungsschritt bei einer Temperatur zwischen 700 und 1200°C durchgeführt wird.

5. Verfahren zur Herstellung eines Titan-Niob-Mischoxids nach einem der Ansprüche 1 bis 4, ***dadurch gekennzeichnet,* dass** der Titanvorläufer ausgewählt ist aus der Gruppe bestehend aus Titanoxysulfat (TiOSO₄); Titanisopropoxid (Ti(OCH(CH₃)₂)₄); Titanchlorid (TiCl₄); Titanbutoxid (Ti(OC₄H₉)₄).

6. Verfahren zur Herstellung eines Titan-Niob-Mischoxids nach einem der Ansprüche 1 bis 5, ***dadurch gekennzeichnet,* dass** der Niobvorläufer ausgewählt ist aus der Gruppe bestehend aus Niobchlorid (NbCl₅); Niobethoxid, Nb(OC₂H₅)₅.

7. Titan-Niob-Mischoxid, das nach dem Verfahren nach einem der Ansprüche 1 bis 6 erhalten wird, ***dadurch gekennzeichnet,* dass** es eine spezifische Oberfläche zwischen 5 m²/g und 45 m²/g aufweist.

8. Titan-Niob-Mischoxid nach Anspruch 7, ***dadurch gekennzeichnet,* dass** es die Formel TiₓNb_{2y}O_{(2x+5y)} hat, wobei x zwischen 1 und 2 und y zwischen 1 und 12 liegt.

9. Elektrode, deren aktives Material mindestens ein Mischoxid aus Titan und Niob nach Anspruch 7 umfasst.

10. Negative Elektrode, deren aktives Material mindestens ein Mischoxid aus Titan und Niob nach Anspruch 7 umfasst.

11. Lithium-Akkumulator, der mindestens eine Elektrode enthält, deren aktives Material mindestens ein Mischoxid aus Titan und Niob nach Anspruch 7 umfasst.

## Claims

1. A method of preparing a titanium and niobium mixed oxide comprising the steps of:
- preparing a titanium and niobium mixed oxide in amorphous form by a solvothermal treatment of at least one titanium precursor and of at least one niobium precursor;
- mechanically crushing the titanium and niobium mixed oxide obtained at the end of the solvothermal treatment;
- calcinating the mixed oxide obtained after crushing.

2. The method of preparing a titanium and niobium mixed oxide of claim 1, ***characterized* in that** the solvothermal treatment of the titanium and niobium precursors is performed at a temperature in the range from 200 to 250°C.

3. The method of preparing a titanium and niobium mixed oxide of claim 1 or 2, ***characterized* in that** the mixed oxide in amorphous form is washed prior to the calcination step.

4. The method of preparing a titanium and niobium mixed oxide of any of claims 1 to 3, ***characterized* in that** the calcination step is carried out at a temperature in the range from 700 to 1,200°C.

5. The method of preparing a titanium and niobium mixed oxide of any of claims 1 to 4, ***characterized* in that** the titanium precursor is selected from the group comprising titanium oxysulfate (TiOSO₄); titanium isopropoxide (Ti(OCH(CH₃)₂)₄); titanium chloride (TiCl₄); titanium butoxide (Ti(OC₄H₉)₄).

6. The method of preparing a titanium and niobium mixed oxide of any of claims 1 to 5, ***characterized* in that** the niobium precursor is selected from the group comprising niobium chloride (NbCl₅); niobium ethoxide, Nb(OC₂H₅)₅.

7. A titanium and niobium mixed oxide obtained according to the method of any of claims 1 to 6, ***characterized* in that** it has a specific surface in the range from 5 m²/g to 45 m²/g.

8. The titanium and niobium mixed oxide of claim 7, ***characterized* in that** it has formula TiₓNb_{2y}O_{(2x+5y)}, x being in the range from 1 to 2 and y being in the range from 1 to 12.

9. An electrode having its active material comprising at least one titanium and niobium mixed oxide of claim 7.

10. A negative electrode having its active material comprising at least one titanium and niobium mixed oxide of claim 7.

11. A lithium accumulator containing at least one electrode having its active material comprising at least one titanium and niobium mixed oxide of claim 7.
